## Europäisches Patentamt

## European Patent Office

## Office européen des brevets

(19)

(11) Veröffentlichungsnummer : **0 129 911**
**B1**

(12) **EUROPÄISCHE PATENTSCHRIFT**

(45) Veröffentlichungstag der Patentschrift :
**19.08.87**

(51) Int. Cl.⁴ : **B 65 G 13/071**

(21) Anmeldenummer : **84107392.7**

(22) Anmeldetag : **27.06.84**

(54) Rollentransportvorrichtung.

(30) Priorität : **28.06.83 DE 3323293**

(43) Veröffentlichungstag der Anmeldung :
**02.01.85 Patentblatt 85/01**

(45) Bekanntmachung des Hinweises auf die Patenterteilung : **19.08.87 Patentblatt 87/34**

(84) Benannte Vertragsstaaten :
**AT BE CH DE FR GB IT LI LU NL SE**

(56) Entgegenhaltungen :
**DE-A- 3 023 334**
**DE-A- 3 148 176**
**DE-B- 2 502 557**

(73) Patentinhaber : **Stirner, Anita Maria**
**Beibergstrasse 23**
**D-7085 Bopfingen-Flochberg (DE)**

(72) Erfinder : **Mayer, Richard**
**Keltenstrasse 17**
**D-7085 Bopfingen-Oberdorf (DE)**
Erfinder : **Stirner, Georg**
**Beibergstrasse 23**
**D-7085 Bopfingen-Flochberg (DE)**

(74) Vertreter : **Helms, Joachim, Dipl.-Ing.**
**Nymphenburger Strasse 81**
**D-8000 München 19 (DE)**

EP 0 129 911 B1

**Beschreibung**

Die Erfindung betrifft eine Rollentransportvorrichtung, bestehend aus über Wellen angetriebene Transportrollen, die beim Abbremsen des Transportgutes in Bezug auf das weiterlaufende Antriebsorgan unabhängig drehbeweglich bleiben, wobei die Transportrollen auf ihren zugeordneten Rollen drehfest angebracht sind, die Wellen über eine außerhalb der Transportbahn liegende Antriebswelle mittels Kegelrädern angetrieben werden und das auf der Transportrollenwelle angeordnete Kegelrad drehfest mit der Welle verbunden ist.

Derartige Fördervorrichtungen (bekannt aus DE-B-2 502 557) finden z. B. als Montagestraßen in der Automobilindustrie zur Förderung von Einzelaggregaten, so z. B. Wellen, Motorblöcken usw. Verwendung.

Hierbei werden die Teile von einer Montagestation zur nächsten Montagestation gefördert, wobei an den einzelnen Montagestationen die Werkstücke zur Bearbeitung angehalten werden und nach der Bearbeitung weitergefördert werden. Dabei sind die Transportrollen mit dem Antriebsorgan reibungsmäßig verbunden, so daß ein Stillstand der Transportrollen möglich ist, wenn das Fördergut angehalten wird und nach erneuter Freigabe des Förderguts aufgrund der reibungsmäßigen Kopplung der Transportrolle mit dem Antriebsorgan ein erneutes Anfahren der Transportrollen gewährleistet ist.

Bei bekannten Konstruktionen (z. B. DE-PS 2 502 557) derartiger Fördervorrichtungen sind die Transportrollen auf in einem Gerüst angeordneten Antriebswellen mit einem geringen Spiel angebracht, so daß zwischen Antriebswelle und Transportrollen ein Reibschluß ausgebildet wird. Die Antriebswellen werden dabei mittels Ketten und Zahnrädern oder mittels Kegelzahnrädern angetrieben.

Es zeigte sich jedoch, daß derartige sog. Friktionsrollenbahnen insofern nachteilig sind, als der Reibschluß zwischen Antriebswelle und Transportrolle durch die rauhen Umgebungsbedingungen beeinflußt wird. So kann z. B. von den Werkstücken herabtropfendes Öl den Reibschluß herabsetzen oder das Aufbringen von aggressiven Chemikalien eine Korrosion herbeiführen, wodurch der Reibschluß bis zu einem Form- oder Kraftschluß erhöht wird. Durch beide Erscheinungen wird die Friktionsrollenbahn unbrauchbar, wodurch Betriebsstörungen auftreten.

Um diesen Nachteil zu beseitigen, ist es bekannt, den Reibschluß aus dem Bereich der Förderbahn heraus anzuordnen (DE-GM 7 716 809). Die Transportrollen sind bei dieser bekannten Konstruktion fest auf den Transportwellen angeordnet. Die in einem Gerüst gelagerten Transportwellen erstrecken sich mit einem Ende durch das Gerüstprofil, in dem eine parallel zur Rollenbahn verlaufende Antriebswelle vorgesehen ist. Auf der Antriebswelle befinden sich Kegelreibräder, die reibungsmäßig mit am Wellenende angeordneten Kegelrädern in Eingriff stehen.

Werden bei dieser Rollenförderbahn einige Transportrollen an einer Montagestation oder aufgrund eines Staus angehalten, so bewegen sich die Kegelräder der Antriebswelle reibungsmäßig gegenüber den stillstehenden Kegelrädern der Transportwellen. Nach der Freigabe läuft die Transportrolle aufgrund des Reibschlusses zwischen den Kegelrädern wieder an. Damit immer der erforderliche Reibschluß auch bei Verschleiß der Reibflächen der Kegelräder aufrechterhalten wird, werden die Kegelräder mittels Federn gegeneinander gedrückt.

Diese Transportrollenvorrichtung hat jedoch den Nachteil, daß die Reibflächen der Kegelräder ungleichförmig abgenutzt werden. Wird nämlich eine Transportrolle angehalten, so bewegt sich das Antriebskegelrad gegenüber dem angehaltenen, angetriebenen Kegelrad an einer begrenzten Kegelradfläche, die somit erhöhtem Verschleiß unterworfen ist. Hierdurch werden die angetriebenen Kegelräder mit der Zeit unrund, wodurch keine sichere Ineingriffnahme von antreibendem und angetriebenem Kegelrad gewährleistet ist.

Um derartige Verschleißerscheinungen zu vermeiden, wurde vorgeschlagen, einen Magnetschluß zwischen Transportwelle und Antriebsorgan vorzusehen (DE-PS 3 023 334). Eine derartige Konstruktion ist jedoch aufwendig und teuer.

Aus der DE-A 3 148 176 ist eine Rollentransportvorrichtung bekannt, die jedoch mit Kegelreibrädern arbeitet, bei denen grundsätzlich immer bei derartigen Rollentransportvorrichtungen die Gefahr besteht, daß die Reibflächen der Kegelräder ausgerieben werden, wodurch Kalotten entstehen, so daß ein sicherer Eingriff der Kegelreibräder nicht mehr gegeben ist und sich dadurch ein unrunder Lauf ergibt. Weiter ist es aus dieser Entgegenhaltung bekannt, zum Antrieb einer gattungsgemäßen Rollentransportvorrichtung ein Schneckengetriebe mit kämmenden Zahnflanken zu verwenden, bei dem zur Festlegung des Schneckenrades ein Stellring vorgesehen ist und zur Übertragung des Drehmoments von der Schneckenspindel auf das Rad eine mittels einer Feder gegen das Schneckenrad gepreßte Reibhülse auf der Rollenwelle angeordnet ist. Auch hier tritt das Problem der Flankenpressung zwischen Schnecke und Schneckenrad auf, wobei zur Einstellung eines bestimmten Spiels zwischen den Flanken, wie bei einem Kegelzahnradantrieb, ein Stellring vorgesehen ist. Das Schneckenrad ist dabei drehfrei auf der Rollenwelle angeordnet, wobei die Übertragung des Antriebsmoments mittels einer Feder auf einer Verlängerung der Rollenwelle bewirkt wird.

Eine derartige Konstruktion ist für Kegelzahnräder nicht geeignet, da es bei der Verwendung von Kegelzahnrädern erforderlich ist, daß die Rollenwelle und die Antriebswelle in einer Ebene liegen.

Es ist daher Aufgabe der vorliegenden Erfindung, eine Transportrollenvorrichtung der eingangs genannten Art derart weiterzubilden, daß ein ungleichförmiger Verschleiß der Antriebsorgane vermieden wird.

Diese Aufgabe wird durch die in Anspruch 1 gekennzeichnete Erfindung gelöst.

Bei der erfindungsgemäßen Transportrollenbahn kann der Reibschluß nicht durch Öl oder aggressive Chemikalien beeinflußt werden, da er sich außerhalb der Transportbahn befindet.

Da die Antriebselemente in einem abgedeckten Profil des Transportrollengerüstes angeordnet sind, ist ebenfalls deren Betriebssicherheit gewährleistet.

Ebenfalls wird mit der erfindungsgemäßen Transportrollenbahn die Unfallgefahr gemindert, da Transportrolle und Rollenwelle gemeinsam angehalten werden und die sich bewegenden Antriebsorgane in einem geschlossenen Gehäuse angeordnet sind.

Schließlich kann der gewünschte Reibschluß je nach Größe des erforderlichen Drehmoments mittels der Federelemente auf einfache Weise eingestellt werden.

Durch die Anordnung der Feder in dem dem angetriebenen Kegelzahnrad gegenüberliegenden Antriebswellenbereich wird eine äußerst platzsparende Konstruktion geschaffen.

Schließlich wird in vorteilhafter Weise ein ungleichförmiger Verschleiß der Kegelräder vermieden.

Vorteilhafte Ausgestaltungen der erfindungsgemäßen Transportrollenbahn ergeben sich aus den Unteransprüchen.

So können die Kegelzahnräder in vorteilhafter Ausgestaltung der Erfindung aus Kunststoff ausgebildet sein. Hierdurch ergibt sich ein geräuscharmer, umweltfreundlicher Antrieb, wobei ebenfalls ggf. eine Schmierung entfallen kann, wodurch die Herstellung- und Betriebskosten gesenkt werden können.

Gemäß einer weiteren vorteilhaften Ausgestaltung der Erfindung sind die Stellringe auf der Antriebswelle mittels einer Klemmverbindung kraftschlüssig angeordnet. Hierdurch wird neben einer einfachen Montage auch eine einfache Einstellbarkeit und Nachstellbarkeit des Antriebs gewährleistet.

Weiter ist in vorteilhafter Ausgestaltung der Erfindung vorgesehen, daß die Reibhülse aus Metall besteht. Dies ist eine billige und dauerhafte Lösung für den Fall, daß der Reibkoeffizient von Metall für den Antrieb ausreichend ist.

Ist dies nicht der Fall, so kann die Reibhülse ebenfalls in vorteilhafter Ausgestaltung der Erfindung aus einem geeigneten Kunststoff bestehen, der den erforderlichen Reibungskoeffizient gewährleistet.

Zur optimalen Anpassung von Verschleißfestigkeit und Reibungskoeffizient der Antriebsorgane ist weiter in vorteilhafter Ausgestaltung der Erfindung eine Beschichtung auf der mit dem Flansch der Reibhülse reibungsmäßig in Eingriff stehenden Fläche des Kegelzahnrades und/oder auf der mit dem Kegelzahnrad in reibungsmäßigem Eingriff stehenden Flanschfläche der Reibhülse vorgesehen.

Weiter ist in vorteilhafter Ausgestaltung der Erfindung die die Reibhülse gegen das Kegelrad drückende Feder als Schraubenfeder ausgebildet. Durch geeignete Auswahl der Federkonstanten kann jeder gewünschte Reibschluß erreicht werden, wobei diese Konstruktion aufgrund der Tatsache, daß Schraubenfedern aller Art auf dem Markt erhältlich sind, billig ist.

In weiterer vorteilhafter Ausgestaltung der Erfindung kann der mit dem Flansch verbundene Hülsenabschnitt der Reibhülse als Federkörper so ausgebildet sein, daß der Flansch die Gestalt einer Scheibe hat und an der Feder fest angeordnet ist. Hierdurch reduzieren sich die Konstruktionselemente, wodurch eine schnellere und einfachere Montage möglich wird.

Ausführungsbeispiele der vorliegenden Erfindung sind in der Zeichnung dargestellt und werden im folgenden näher beschrieben. Es zeigen :

Figur 1 eine Aufsicht auf einen Transportrollenbahnabschnitt ;

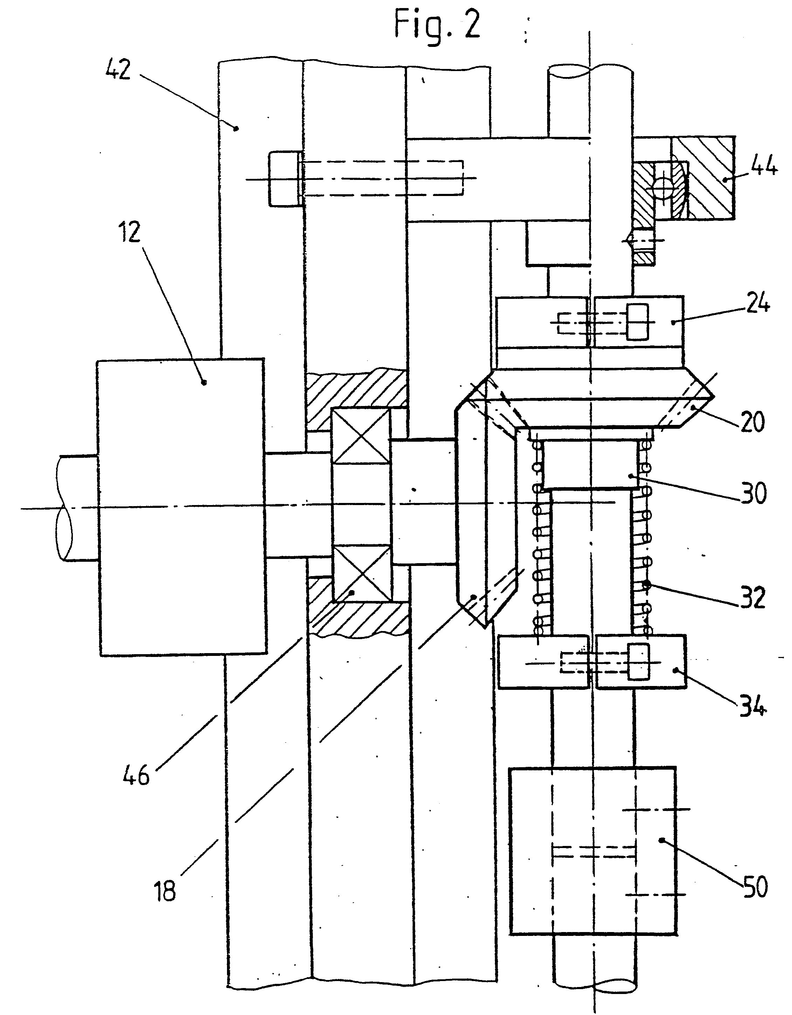

Figur 2 eine vergrößerte Aufsicht des Transportrollenantriebs ;

Figur 3 eine vergrößerte, teilweise geschnittene Ansicht des Reibschlusses zwischen Reibhülse und Antriebskegelzahnrad ; und

Figur 4 eine weitere Ausführungsform der Reibhülse.

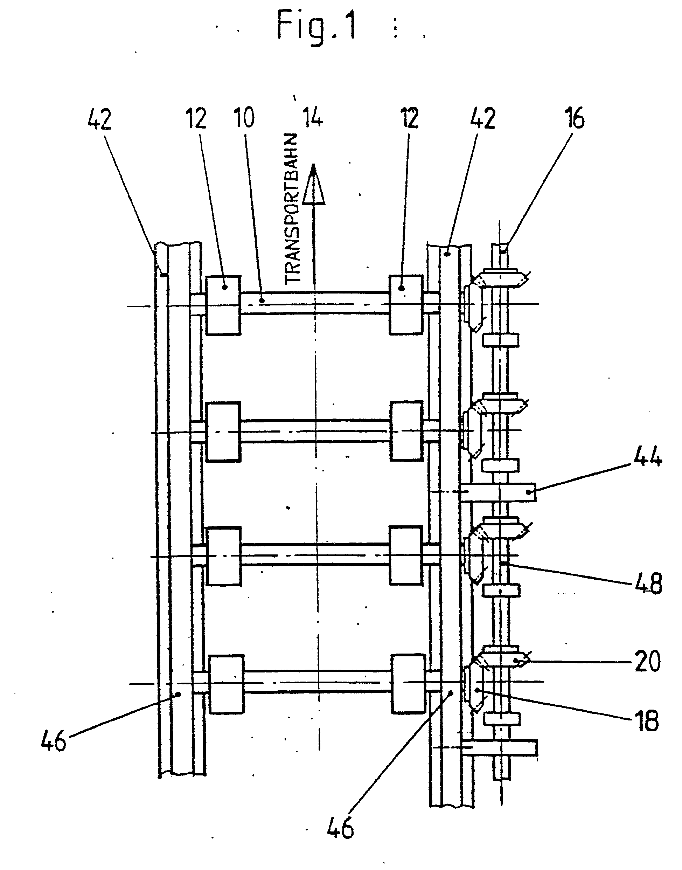

Fig. 1 zeigt eine schematische Aufsicht auf einen Transportrollenbahnabschnitt 14. Die Transportrollenbahn besteht aus einem Gestell 42, das vorzugsweise mittels Profilschienen aus Metall, z. B. Aluminium, ausgebildet ist, in denen die Lagerung 46 für die Wellen 10 der Transportrollen 12 angeordnet ist. Die Profilschienen sind so ausgebildet, daß ihr Inneres Raum für ein Gehäuse 44 für die Antriebsorgane der Transportrollenbahn gibt.

Die Transportrollen 12 sind fest auf den Wellen 10 angeordnet. Die Antriebsorgane für die Transportrollenbahn umfassen in Segmenten in dem Gehäuse 44 angeordnete Antriebswellen 16, die mittels geeigneter Kupplungen 50 verbunden sind.

Auf den Wellenabschnitten 48 der Antriebswelle 16 sind in Bezug zur Antriebswelle drehbar angeordnete Kegelzahnräder 20 vorgesehen, die mit fest auf den Wellenenden der Welle 10 der Transportrollen 12 angeordneten Kegelzahnrädern 18 kämmen. Die auf der Antriebswelle 16 angeordneten Kegelzahnräder 20 sind auf ihrer Rückseite 22 mittels eines Stellrings 24 in axialer Richtung festgelegt, wobei zwischen dem Stellring 24 und dem Kegelzahnrad 20 eine relative Drehbewegung möglich ist. Auf der Vorderseite 26 des Kegelzahnrades 20 ist relativ drehbar zur Antriebswelle 16 eine Reibhülse 30 auf der Antriebswelle 16 angeordnet, die sich mittels einer Feder 32 gegen einen zweiten fest auf der Antriebswelle 16 angeordneten Stellring 34 abstützt und mit dem einen Ende zur Übertragung eines Antriebsmoments fest mit dem Stellring 34 verbunden ist. Dabei erstreckt sich die Feder 32 über einen Teil des Wellenabschnitts 48, der den auf der Welle 10 angeordneten Kegelrad 18 gegenüberliegt. Der Flansch 28 der Reibhülse 30 steht somit reibungsmäßig mit dem Kegelzahnrad 20 in Eingriff, wobei der Reibschluß mittels der Federkraft der Feder 32 und der Stellung des Stellrings 34 einstellbar ist.

Die beschriebene Transportrollenbahn 14 arbeitet wie folgt.

Ein Antriebselement, z. B. ein Elektromotor treibt die Antriebswelle 16 mit konstanter Geschwindigkeit an. Das Antriebsmoment wird über den Stellring 34, die Feder 32 und die Reibhülse 30 auf die Vorderseite 26 des Kegelzahnrades 20 übertragen, wobei sich das Kegelzahnrad 20 auf seiner Rückseite in axialer Richtung gegen den Stellring 24 abstützt. Das mittels Reibschluß angetriebene Kegelrad 20 kämmt mit dem fest auf der Welle 10 angeordneten Kegelzahnrad 18 und treibt somit die Transportrollen 12 an. Wird nun eine oder werden mehrere Transportrollen 12 aufgrund eines Staus oder an einer Montagestation angehalten, so bremst das fest auf der Welle 10 angeordnete Kegelzahnrad 18 das auf der Antriebswelle 16 drehbar angeordnete Kegelzahnrad 20 ab, wobei sich die Antriebswelle 16 aufgrund des sich zwischen dem Flansch 28 der Reibhülse 30 und der Vorderseite 26 des Kegelzahnrads 20 ausgebildeten Reibschlusses weiterdrehen und die nicht abgebremsten Transportrollen 12 weiter antreiben kann. Da hierbei immer zwei ebene Kreisringflächen von der Reibhülse 30 und dem Kegelzahnrad 20 in Eingriff stehen und gegeneinander reiben, ist ein gleichförmiger Verschleiß der Vorderseite 26 und der Flanschfläche 38, und somit ein sicherer Antrieb der Transportrollen 12 gewährleistet.

Um die gewünschten Reibeigenschaften zwischen der Reibhülse 30, dem Kegelrad 20, der Antriebswelle 16 und dem Stellring 24 zu gewährleisten, können die Kegelzahnräder 20 aus Kunststoff ausgebildet sein. Ebenfalls können die Kegelzahnräder 18 aus Kunststoff ausgebildet sein. Weiter kann die Reibhülse 30 aus Kunststoff oder Metall ausgebildet sein.

Durch geeignete Beschichtungen der durch Reibschluß verbundenen Flächen zwischen dem Kegelzahnrad 20, dem Stellring 24, der Antriebswelle 16 und dem Flansch 28 der Reibhülse 30 kann der Reibschluß als auch der Verschleiß in geeigneter Weise beeinflußt werden.

Die Klemmringe 24, 34 sind auf der Antriebswelle 16 mittels einer Klemmverbindung angeordnet, wodurch die Nachstellung als auch die Montage erleichtert werden. Es ist jedoch ebenfalls eine feste Anordnung möglich, wenn dies gewünscht wird.

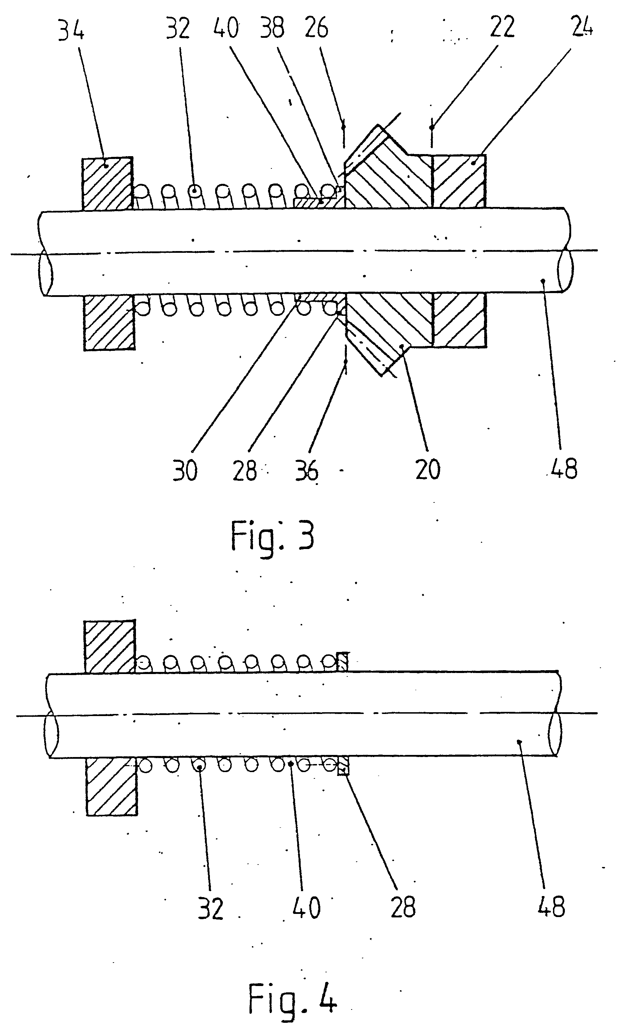

Bei einer weiteren Ausführungsform der Erfindung (Fig. 4) ist der Hülsenabschnitt 40 der Reibhülse 30 direkt als Feder 32 ausgebildet, wobei lediglich am Federende der Flansch 28 fest angeordnet ist. Dabei kann die Feder 32 als Schraubenfeder oder als geeignetes Federelement ausgebildet sein. Ebenfalls kann diese Ausführungsform der Reibhülse 30 aus Metall oder Kunststoff bestehen.

**Patentansprüche**

1. Rollentransportvorrichtung, bestehend aus über Wellen (10) angetriebene Transportrollen (12), die beim Abbremsen des Transportgutes in Bezug auf das weiterlaufende Antriebsorgan unabhängig drehbeweglich bleiben, wobei die Transportrollen auf ihren zugeordneten Wellen drehfest angebracht sind, die Wellen über eine außerhalb der Transportbahn (14) liegende Antriebswelle (16) mittels Kegelrädern (18, 20) angetrieben werden, und das auf der Transportrollenwelle (10) angeordnete Kegelrad (18) drehfest mit der Welle (10) verbunden ist, dadurch gekennzeichnet, daß

a) die Kegelräder (18, 20) als Kegelzahnräder ausgebildet sind,

b) das auf der Antriebswelle (16) angeordnete Kegelzahnrad (20) drehbar auf der Antriebswelle (16) angeordnet ist und auf seiner Rückseite (22) mittels eines drehfest auf der Antriebswelle (16) angeordneten Stellrings (24) gegen eine axiale Verschiebung auf der Antriebswelle (16) festgelegt ist, und

c) auf seiner Vorderseite (26) mit dem Flansch (28) einer auf der Antriebswelle (16) drehbar angeordneten Reibhülse (30) reibungsmäßig in Eingriff steht, wobei

d) die Reibhülse (30) sich mittels einer Feder (32) gegen einen weiteren auf der dem Flansch (28) abgewandten Seite der Antriebswelle (16) drehfest angeordneten Stellring (34) abstützt, und

e) die Feder (32) mit dem zweiten Stellring (34) zur Übertragung eines Drehmoments auf die Reibhülse (30) fest verbunden ist.

2. Transportvorrichtung nach Anspruch 1, dadurch gekennzeichnet, daß die Kegelzahnräder (18, 20) aus Kunststoff ausgebildet sind.

3. Transportvorrichtung nach Anspruch 1 oder 2, dadurch gekennzeichnet, daß die Stellringe (24, 34) auf der Antriebswelle (16) mittels einer Klemmverbindung kraftschlüssig angeordnet sind.

4. Transportvorrichtung nach einem der Ansprüche 1 bis 3, dadurch gekennzeichnet, daß die Reibhülse (30) aus Metall besteht.

5. Transportvorrichtung nach einem der Ansprüche 1 bis 4, dadurch gekennzeichnet, daß die Reibhülse (30) aus Kunststoff besteht.

6. Transportvorrichtung nach einem der Ansprüche 1 bis 5, dadurch gekennzeichnet, daß die mit dem Flansch (28) der Reibhülse (30) reibungsmäßig in Eingriff stehende Fläche (36) des Kegelzahnrads (20) auf der Antriebswelle (16) eine Beschichtung aufweist.

7. Transportvorrichtung nach einem der Ansprüche 1 bis 6, dadurch gekennzeichnet, daß die mit dem Kegelzahnrad (20) in reibungsmäßigem Eingriff stehende Flanschfläche (38) der Reibhülse (30) eine Beschichtung aufweist.

8. Transportvorrichtung nach einem der Ansprüche 1 bis 7, dadurch gekennzeichnet, daß die die Reibhülse (30) gegen das Kegelzahnrad (20) drückende Feder (32) als Schraubenfeder ausgebildet ist.

9. Transportvorrichtung nach einem der Ansprüche 1 bis 8, dadurch gekennzeichnet, daß der Flansch (28) als Scheibe ausgebildet und an der Feder (32) fest angeordnet ist.

## Claims

1. A roller transporting device, comprising transport rollers (12) driven via shafts (10), said rollers remaining independently capable of rotary movement with respect to the drive member that continues running, when the material being transported is slowed down, said transport rollers being provided on the shafts associated therewith so as to rotate therewith, said shafts being driven by means of bevel wheels (18, 20) via a driving shaft (16) disposed outside the path of transport (14), and the bevel wheel (18) disposed on the transport roller shaft (10) being connected with said shaft (10) so as to rotate therewith, characterized in that

a) the bevel wheels (18, 20) are designed as bevel gearwheels,

b) the bevel gearwheel (20) disposed on the driving shaft (16) is disposed rotatably on the driving shaft (16) and is fixed on its back (22) against axial displacement on the driving shaft (16) by means of a set collar (24) disposed on the driving shaft (16) so as to rotate therewith, and

c) is in frictional engagement on its front (26) with the flange (28) of a friction sheath (30) disposed rotatably on the driving shaft (16),

d) the friction sheath (30) being supported by means of a spring (32) against a further set collar (34) disposed on the side of the driving shaft (16) facing away from the flange (28) so as to rotate therewith, and

e) the spring (32) being firmly connected with the second set collar (34) for transmitting torque to the friction sheath (30).

2. A transport device according to claim 1, characterized in that the bevel gearwheels (18, 20) are formed of plastics material.

3. A transport device according to claim 1 or 2, characterized in that set collars (24, 34) are disposed on the driving shaft (16) in non-positive fashion by means of a compression joint.

4. A transport device according to any of claims 1 to 3, characterized in that the friction sheath (30) is made of metal.

5. A transport device according to any of claims 1 to 4, characterized in that the friction sheath (30) is made of plastics material.

6. A transport device according to any of claims 1 to 5, characterized in that that surface (36) of the bevel gearwheel (20) on the driving shaft (16) which is in frictional engagement with the flange (28) of the friction sheath (30) has a coating.

7. A transport device according to any of claims 1 to 6, characterized in that the flange surface (38) of the friction sheath (30) that is in frictional engagement with the bevel gearwheel (20) has a coating.

8. A transport device according to any of claims 1 to 7, characterized in that the spring (32) pressing the friction sheath (30) against the bevel gearwheel (20) is designed as a coil spring.

9. A transport device according to any of claims 1 to 8, characterized in that the flange (28) is designed as a disk and is firmly disposed on the spring (32).

## Revendications

1. Dispositif de transport à rouleaux, consistant en rouleaux de transport (12) entraînés à l'intermédiaire d'arbres (10) et gardant leur mobilité rotative de façon indépendante de la marche continue de l'organe moteur, pendant le freinage de la charge à transporter, ces rouleaux de transport étant montés de façon fixe sur leurs arbres respectifs, les arbres étant entraînés, à l'intermédiaire de roues coniques (18, 20), par un arbre primaire (16) situé hors de la voie de transport (14), et la roue conique (18) disposée sur l'arbre des rouleaux de transport (10) étant montée de façon fixe sur cet arbre (10), caractérisé en ce que

a) les roues coniques (18, 20) sont des roues d'engrenage coniques,

b) la roue d'engrenage conique (20) disposée sur l'arbre primaire (16) est montée de façon mobile sur cet arbre primaire (16) et elle est bloquée au derrière contre tout déplacement axial sur l'arbre primaire (16), à l'aide d'une bague d'arrêt (24) disposée de façon fixe sur l'arbre primaire (16), et

c) elle se trouve en contact glissant, sur le devant (26), avec la bride (28) d'une douille de friction (30) disposée de façon mobile sur l'arbre primaire (16),

d) la douille de friction (30) s'appuyant, à l'intermédiaire d'un ressort (32), contre une autre bague d'arrêt (34) disposée de façon fixe sur l'arbre primaire (16) à sa partie éloignée de la bride (28) et

e) le ressort (32) étant relié de façon fixe à la deuxième bague d'arrêt (34), afin d'assurer la transmission d'un couple sur la douille de friction (30).

2. Dispositif de transport selon la revendication 1, caractérisé en ce que les roues d'engrenage coniques (18, 20) sont en matière plastique.

3. Dispositif de transport selon la revendication 1 ou 2, caractérisé en ce que les bagues d'arrêt (24, 34) sont disposées, à l'aide d'une jonction par serrage, sur l'arbre primaire (16) de façon à être entraînées par adhérence.

4. Dispositif de transport selon une des revendications 1 à 3, caractérisé en ce que la douille de friction (30) est en métal.

5. Dispositif de transport selon une des revendications 1 à 4, caractérisé en ce que la douille de friction (30) est en matière plastique.

6. Dispositif de transport selon une des revendications 1 à 5, caractérisé en ce que la surface (36) de la roue d'engrenage conique (20) sur l'arbre primaire (16), qui est en contact glissant avec la bride (28) de la douille de friction (30), présente une couche.

7. Dispositif de transport selon une des revendications 1 à 6, caractérisé en ce que la surface de bride (38) de la douille de friction (30) étant en contact glissant avec la roue d'engrenage conique (20) présente une couche.

8. Dispositif de transport selon une des revendications 1 à 7, caractérisé en ce que le ressort (32) pressant la douille de friction (30) contre la roue d'engrenage conique (20) est un ressort à boudin.

9. Dispositif de transport selon une des revendications 1 à 8, caractérisé en ce que la bride (28) se présente en forme de rondelle plate et qu'elle est disposée de façon fixe au ressort (32).

# Fig.1

# Fig. 2

Fig. 3

Fig. 4